**Europäisches Patentamt**

(19) **European Patent Office**

**Office européen des brevets**

(11) Veröffentlichungsnummer: **0 031 053**

**A1**

(12) ## EUROPÄISCHE PATENTANMELDUNG

(21) Anmeldenummer: **80107466.7**

(22) Anmeldetag: **28.11.80**

(51) Int. Cl.³: **G 02 B 7/26**

(30) Priorität: **20.12.79 DE 2951483**

(43) Veröffentlichungstag der Anmeldung:
**01.07.81 Patentblatt 81/26**

(84) Benannte Vertragsstaaten:
**AT BE CH FR GB IT LI LU NL SE**

(71) Anmelder: **SIEMENS AKTIENGESELLSCHAFT Berlin und München**
**Postfach 22 02 61**
**D-8000 München 22(DE)**

(72) Erfinder: **Schneider, Bernd**
**Harthauser Strasse 79**
**D-8000 München 90(DE)**

(54) **Spleissvorrichtung zum Herstellen von Lichtwellenleiterverbindungen.**

(57) Die Erfindung bezieht sich auf eine Spleißvorrichtung zum Herstellen von Lichtwellenleiterverbindungen, wobei die Zentrierung und Ausrichtung in einem Spleißelement (6) mit zentrierenden Nuten (5) erfolgt. Zu beiden Seiten eines verstellbaren Trägers (9) sind schwenkbare Haltevorrichtungen (4) mit Klemmelementen (7,8) für die Umhüllungen und die abgemantelten Lichtwellenleiter (3) angeordnet. Durch Anheben des Spleißelementes (6) werden die Lichtwellenleiterenden (1) in die Nuten (5) gesenkt und miteinander verklebt. Nach dem Verkleben und Festklemmen werden die Lichtwellenleiter (3) durch Weiterbewegen des Trägers (9) in eine Lage geschwenkt, in der auch die Umhüllungen (2) der Lichtwellenleiter (3) koaxial ausgerichtet sind und mit dem Spleißelement zu einer gestreckten Baueinheit verbunden werden. Die beim Hochschwenken der Haltevorrichtungen (4) entstehende Überlänge (x) wird dadurch kompensiert, daß die Drehpunkte (11) der Haltevorrichtungen (4) mit Hilfe von Kugelführungen (12) verschiebbar angeordnet sind.

FIG 2

SIEMENS AKTIENGESELLSCHAFT          Unser Zeichen
Berlin und München                  VPA 79 P 7225

Spleißvorrichtung zum Herstellen von Lichtwellenleiterverbindungen

Die Erfindung bezieht sich auf eine Spleißvorrichtung zum
Herstellen von Lichtwellenleiterverbindungen unter Verwendung von Spleißelementen mit zentrierenden Nuten, bei
der zu beiden Seiten eines verstellbaren Trägers für die
Spleißelemente schwenkbare Haltevorrichtungen mit Klemmelementen für die Umhüllungen der Lichtwellenleiter und
für die abgemantelten Lichtwellenleiterenden angeordnet
sind, die zu Beginn des Spleißvorganges einen solchen
Neidungswinkel aufweisen, daß beim Bewegen des Trägers
in Richtung der Haltevorrichtungen sich die geneigten und
in die zentrierenden Nuten absenkenden Lichtwellenleiterenden vor dem Zusammenstoßen koaxial ausrichten, und die
nach dem Verkleben und Festklemmen der Lichtwellenleiterenden durch Weiterbewegen des Trägers in eine Lage geschwenkt werden, in der auch die Umhüllungen der Lichtwellenleiter koaxial ausgerichtet sind und mit den Spleißelementen zu einer gestreckten Baueinheit verbunden werden.

Hs 1 Kow / 6.12.1979

Eine Spleißvorrichtung dieser Art ist durch die DE-OS 28 07 806 bekanntgeworden. Bei dieser bekannten Spleißvorrichtung werden die unter einem bestimmten Anstellwinkel zu den Zentriernuten des Spleißelementes angestellten Lichtwellenleiterenden beim Anheben des Spleißelementes so abgebogen, daß sie sich in den Grund der Zentriernuten legen, wobei sich der Abstand der Lichtwellenleiterenden laufend verändert. Das Spleißelement wird so weit angehoben, daß die Enden der Lichtwellenleiter mit ihren Stirnseiten aneinanderstoßen. Die Länge der aus den Klemmelementen herausragenden Lichtwellenleiterenden ist hierbei so gewählt, daß zumindest in dem Klebe- und Klemmbereich die Lichtwellenleiterenden genau koaxial fluchten. Bekanntlich hängt der Wirkungsgrad einer Spleißverbindung sehr davon ab, wie exakt die Lichtwellenleiterenden vor dem endgültigen Zusammenfügen ausgerichtet werden. Schon eine geringe Versetzung oder Neigung der beiden Achsen der Lichtwellenleiterenden zueinander führt zu einer erheblichen Erniedrigung des Wirkungsgrades.

Nachdem die Verbindung der beiden Lichtwellenleiterenden abgeschlossen ist werden die Haltevorrichtung zur Erzielung einer gestreckten Spleißverbindung hochgeschwenkt. In dieser Lage werden dann die ebenfalls gestreckten Umhüllungen der Lichtwellenleiterenden mit Hilfe einer Art Brücke mit den Spleißelementen verbunden. Da beim Hochschwenken der Haltevorrichtungen eine Überlänge der Lichtwellenleiter entsteht, die zu einem Ausknicken der Lichtwellenleiter führen würde, müssen zuvor die Klemmelemente der Lichtwellenleiter freigegeben werden. Da normalerweise die Lichtwellenleiter lose im Inneren der Umhüllung geführt sind, kann diese Überlänge durch das Längsspiel der Lichtwellenleiter kompensiert werden. Dies gilt auch für die Längendifferenz, die durch das Anbiegen der Lichtwellenleiter beim Einlegen in die Zentriernuten entsteht.

Diese Arbeitsweise läßt sich jedoch nicht beibehalten, wenn die Lichtwellenleiter mit der Umhüllung über eine Füllmasse fest verbunden sind, weil die durch das Schwenken der Haltevorrichtungen entstehende Überlänge zu einem Ausknicken der Lichtwellenleiter führen würde.

Der Erfindung liegt die Aufgabe zugrunde, eine Spleißvorrichtung der eingangs beschriebenen Art derart weiterzubilden, daß damit auch Lichtwellenleiter gespleißt werden können, die über eine Füllmasse mit ihren Umhüllungen fest verbunden sind. Diese Aufgabe wird gemäß der Erfindung dadurch gelöst, daß der Abstand der Drehpunkte der schwenkbaren Haltevorrichtungen mit Hilfe einer Kulissensteuerung in Abhängigkeit ihres Neigungswinkels veränderbar ist.

Vorzugsweise sind die Drehpunkte der Haltevorrichtungen mit Hilfe von Kugelführungen zu- bzw. gegeneinander verschiebbar. Auf diese Weise besteht die Möglichkeit die beim Hochschwenken entstehende Überlänge vollends auszugleichen. Eine besonders einfache Lösung des Problems ergibt sich dadurch, daß seitlich des Trägers für die Spleißelemente je eine Kulisse angeordnet ist, die mit einem an jeder Haltevorrichtung angeordneten Steuernocken zusammenwirkt. Dadurch ergibt sich eine zwangsweise Steuerung des Abstandes der Drehpunkte der schwenkbaren Haltevorrichtungen.

Durch das Zusammenwirken der in Richtung der Achse der Lichtwellenleiter verstellbaren und um einen drehbaren schwenkbaren Anschlag mit den auf dem Träger des Spleißelementes angeordneten in waagerechter Richtung verstellbaren Kulissen sind folgende Einstellungen möglich:

a) Die Länge der Enden der Lichtwellenleiter in Bezug auf den Stoßpunkt kann so eingestellt werden, daß die Endflächen der Lichtwellenleiter wieder hohlgenau unter

leichter Vorspannung an der Stoßstelle aufeinandertreffen.

b) Der Bogen, mit dem die Enden der Lichtwellenleiter in das Spleißelement einlaufen, kann durch Verstellen der Steuernocken an den Haltevorrichtungen und der Kulissen an dem Träger des Spleißelementes so eingestellt werden, daß eine bestimmte Vorspannung erzielt wird, mit der die Enden der Lichtwellenleiter gegen den Nutgrund drücken.

c) Die durch den Bogen der Enden der Lichtwellenleiter entstehende Differenzlänge kann durch Drehen der Anschläge an den Steuernocken kompensiert werden. Damit ist es auch möglich, in der oberen Endstellung der Haltevorrichtungen eine leichte Überlänge der Lichtwellenleiter einzustellen, um sicherzustellen, daß die Lichtwellenleiter nicht unter Zugspannung geraten und an der Spleißstelle auseinandergezogen werden.

Die Erfindung wird anhand der Zeichnung näher erläutert. Es zeigen:

Figur 1 das Prinzip einer an sich bekannten Spleißvorrichtung,
Figur 2 und 3 das Prinzip der erfindungsgemäßen Spleißvorrichtung in zwei Arbeitsphasen und
Figur 4 und 5 die Wirkungsweise der verstellbaren Anschläge.

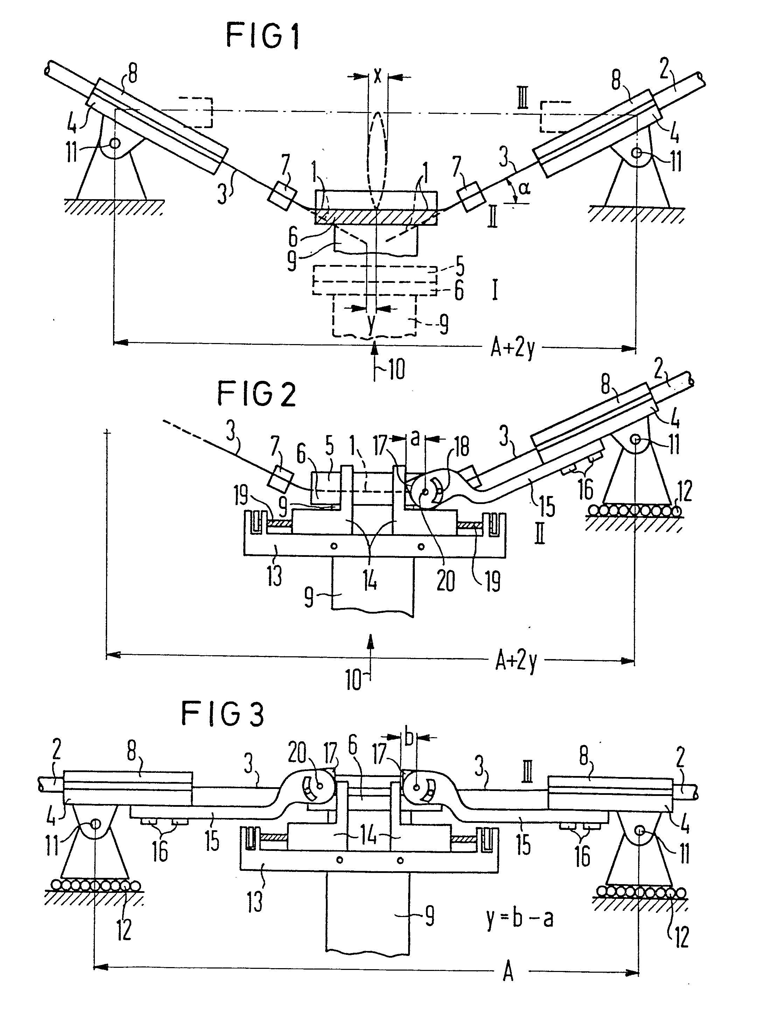

Anhand der Figur 1 wird die Arbeitsweise einer an sich bekannten Spleißvorrichtung erläutert. Die Enden 1 der von ihren Umhüllungen 2 befreiten Lichtwellenleiter 3 werden mit Hilfe von Haltevorrichtungen 4 von beiden Seiten her in einem bestimmten Winkel $\alpha$ gegen die Zentriernuten 5 eines Spleißelementes 6 angestellt. Hierbei dienen Klemmelemente 7 zum Festklemmen der Enden 1 der Lichtwellen-

0031053

leiter 3 und Klemmelemente 8 zum Festklemmen der Lichtwellenleiter 3 mit ihren Umhüllungen 2. Die Klemmelemente
8 befinden sich auf dem schwenkbaren Haltevorrichtungen 4,
während die Klemmelemente 7 feststehend angeordnet sind.
Sie können aber auch mit den Haltevorrichtungen 4 mitgeschwenkt werden. Das Spleißelement 6 ist auf einem in der
Höhe verstellbaren Träger 9 befestigt. Nach dem in Figur 1
dargestellten Prinzip kann gleichzeitig eine Vielzahl von
Lichtwellenleitern gleichzeitig gespleißt werden; die
Lichtwellenleiter 3 liegen dann in einer zur Zeichenebene
senkrechten Ebene.

Mit gestrichelten Linien ist die Ausgangsstellung I des
das Spleißelement 6 tragenden Trägers 9 dargestellt. Wie
ebenfalls mit gestrichelten Linien angedeutet ist, verlaufen die mit Hilfe der Klemmelemente 7 festgeklemmten
Enden 1 der Lichtwellenleiter 3 gerade und unter dem
Winkel $\alpha$ zu den Zentriernuten 5 des Spleißelementes 6.
Zum Einlegen der Enden 1 der Lichtwellenleiter 3 in die
Zentriernuten 5 wird der Träger 9 in Pfeilrichtung 10
bewegt, und zwar bis in die mit stark ausgezogenen Linien
dargestellte Stellung II. Die ursprünglich im Horizontalabstand 2y sich gegenüberstehenden Enden 1 der Lichtwellenleiter 3 liegen nun am Grund der Zentriernut 5 und stoßen
mit ihren Stirnflächen gegeneinander. In dieser Stellung
werden die Enden 1 der Lichtwellenleiter 3 mit einem
Immersionskleber versehen und anschließend mit einem auf
das Spleißelement 6 aufgesetzten Gegenstück festgeklemmt,
was in der Zeichnung nicht dargestellt ist. Danach werden
die Klemmelement 7 gelöst und die Haltevorrichtungen 4 in
die gestrichelt angedeutete gestreckte Lage III geschwenkt,
in der nach Entfernen der Klemmelemente 8 das Spleißelement 6 über eine Art Brücke mit den Umhüllungen 2 der
Lichtwellenleiter zu einer gestreckten Baueinheit verbunden wird. Die beim Hochschwenken entstehende Über-

0031053

länge x, die zu einem Ausknicken der Lichtwellenleiter 3
führen würde, wird durch das Längsspiel in der hohlen
Umhüllung kompensiert. Dies gilt auch für die Längendifferenz $\Delta y$ zwischen den Stellungen I und III, die durch
das Einbringen der Enden 1 beim Einlegen der Lichtwellenleiter 3 in die Zentriernuten entsteht.

Um nun diese Arbeitsweise auch bei Lichtwellenleitern
durchführen zu können, die über eine Füllmasse mit ihren
Umhüllungen fest verbunden sind, wird der Abstand A der
Drehpunkte 11 mit Hilfe einer Kulissensteuerung veränderbar gemacht.

Figuren 2 und 3 zeigen ein Ausführungsbeispiel einer
solchen Spleißvorrichtung. Wie zu ersehen ist, sind die
Drehpunkte 11 der Haltevorrichtungen 4 mit Hilfe von Kugelführungen 12 zu- bzw. gegeneinander verschiebbar angeordnet. Ferner sind seitlich des Trägers 9 für das Spleißelement 6 auf einer Art Brücke 13 zwei verstellbare Kulissen
14 vorgesehen, welche mit je einem Steuernocken 15 zusammenwirken, der an den Haltevorrichtungen 4 mit Hilfe von
Schrauben 16 in Längsrichtung verstellbar angeordnet ist.
Am freien Ende der Steuernocken 15 ist ein um einen Drehpunkt 20 schwenkbarer Anschlag 17 befestigt, der über eine
Kulisse 18 einstellbar ist. Der Drehpunkt 20 ist hierbei
so gewählt, daß er in Richtung der Achse der Lichtwellenleiter 3 verstellbar ist.

Figur 2 zeigt die Stellung, die der Stellung II der Figur 1
entspricht, in der die mit ihren Stirnseiten aneinanderstoßenden Enden 1 der Lichtwellenleiter 3 in den Zentriernuten 5 koaxial zueinander angeordnet sind. Beim Anheben
des Trägers 9 stützen sich die schwenkbaren Anschläge 17
gegen die Kulissen 14 ab, wodurch die beim Hochschwenken
der Haltevorrichtungen 4 auftretende Überlänge x gemäß

Figur 1 kompensiert wird, da die Drehpunkte 11 auf den Kugelführungen 12 laufen.

Figur 3 zeigt die Lage der Haltevorrichtungen in der Stellung III, in der die Enden 1 und Umhüllungen 2 der Lichtwellenleiter in einer horizontalen Ebene liegen. Nach Lösen der Klemmelemente 8 werden mit einer Art Brücke das Spleißelement 6 und die Umhüllungen 2 der Lichtwellenleiter zu einer gestreckten Baueinheit verbunden. Ein solches brückenartiges Element ist beispielsweise in der älteren Patentanmeldung P 29 30 831.4 näher beschrieben.

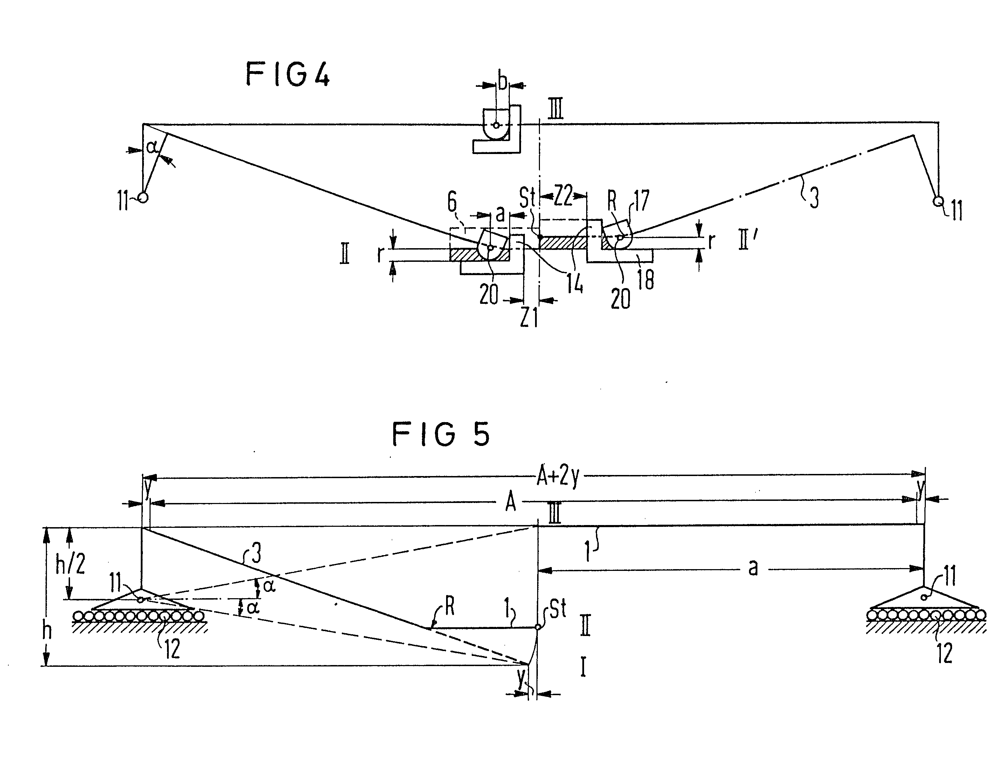

Figur 4 zeigt in einer Prinzipskizze die Wirkungsweise der schwenkbaren Anschläge 17 im Zusammenwirken mit den Kulissen 18. Wie zu ersehen ist, liegt der Drehpunkt 20 der schwenkbaren Anschläge 17 in der Achse der Lichtwellenleiter 3. Durch die Längsverstellung der Steuernocken 15 an den Haltevorrichtungen 4 bewegen sich die Drehpunkte 20 in Achsrichtung. Durch entsprechende Einstellung des Neigungswinkels der Anschläge 17 in Bezug auf die Achse der Lichtwellenleiter 3 und durch Verstellen der Kulissen 18 in horizontaler Richtung kann neben der Einstellung der Länge der Enden 1 der Lichtwellenleiter 3 in Bezug auf die Stoßstelle St auch der Bogen R der Enden 1 eingestellt werden. Damit kann eine bestimmte Vorspannung der Enden 1 der Lichtwellenleiter 3 vorgegeben werden, mit der die Lichtwellenleiter in den Nuten des Spleißelementes 6 liegen. In Figur 4 sind zwei verschiedene Einstellungen 2 der Kulissen 18 dargestellt.

Figur 5 zeigt im Prinzip, daß der Abstand y durch den Bogen R der Enden 1 der Lichtwellenleiter 3 entsteht. In der Stellung I beträgt der Abstand der Drehpunkte 11 der Haltevorrichtungen 4 von der Stoßstelle A + 2y. In der Stellung II stoßen die Enden 1 der

0031053

Lichtwellenleiter 3 aneinander. Der Abstand A + 2y muß während des Hochfahrens von der Stellung II in die Stellung III auf A reduziert werden, da sonst der Spleiß auseinandergezogen werden würde.

Durch die besondere Form des schwenkbaren Anschlages 8 kann also zwischen den Stellungen II und III eine Längendifferenz (a - b) eingestellt werden, die die mit y bezeichnete Länge kompensiert. Durch Einstellung des Schwenkwinkels an diesem Anschlag kann auch erreicht werden, daß in der oberen Einstellung III der Spleißanordnung die Lichtwellenleiter unter einer leichten Druckspannung stehen. Damit kann sichergestellt werden, daß die Lichtwellenleiterverbindung nicht unter Zugspannung gerät und eventuell auseinandergezogen und zerstört wird.

6 Patentansprüche
4 Figuren

79 P 7225

Bezugszeichenliste

1   Enden
2   Unhüllung
3   Lichtwellenleiter
4   Haltevorrichtungen
5   Zentriernuten
6   Spleißelement
7   Klemmelemente
8   "
9   Träger
10  Pfeilrichtung
11  Drehpunkte
12  Kugelführungen
13  Brücke
14  Kulisse
15  Steuernocke
16  Schrank
17  schwenkbarer Anschlag
18  Kulisse
19  Schraubspindel
20  Drehpunkt

0031053

<u>Patentansprüche</u>

1. Spleißvorrichtung zum Herstellen von Lichtwellenleiterverbindungen unter Verwendung von Spleißelementen
mit zentrierenden Nuten, bei der zu beiden Seiten eines
verstellbaren Trägers für die Spleißelemente schwenkbare
Haltevorrichtungen mit Klemmelementen für die Umhüllungen
der Lichtwellenleiter und für die abgemantelten Lichtwellenleiterenden angeordnet sind, die zu Beginn des
Spleißvorganges einen solchen Neigungswinkel aufweisen,
daß beim Bewegen des Trägers in Richtung der Haltevorrichtungen sich die geneigten und in die zentrierenden
Nuten absenkenden Lichtwellenleiterenden vor dem Zusammenstoßen koaxial ausrichten, und die nach dem Verkleben und Festklemmen der Lichtwellenleiterenden durch
Weiterbewegen des Trägers in eine Lage geschwenkt werden,
in der auch die Umhüllungen der Lichtwellenleiter koaxial
ausgerichtet sind und mit den Spleißelementen zu einer
gestreckten Baueinheit verbunden werden, dadurch   g e -
k e n n z e i c h n e t  , daß der Abstand (A) der Drehpunkte (11) der schwenkbaren Haltevorrichtungen (4) mit
Hilfe einer Kulissensteuerung in Abhängigkeit ihres
Neigungswinkels ($\alpha$) veränderbar ist.

2. Spleißvorrichtung nach Anspruch 1, dadurch   g e -
k e n n z e i c h n e t  , daß die Drehpunkte (11) der
Haltevorrichtungen (4) mit Hilfe von Kugelführungen (12)
zu- bzw. gegeneinander verschiebbar sind.

3. Spleißvorrichtung nach Anspruch 1 oder 2, dadurch
g e k e n n z e i c h n e t  , daß seitlich des Trägers
(9) für die Spleißelemente (6) je eine Kulisse (14) angeordnet ist, die mit einem an jeder Haltevorrichtung (4)
angeordneten Steuernocken (15) zusammenwirkt.

**79 P 7 2 25**

0031053

4. Spleißvorrichtung nach Anspruch 3, dadurch  g e -
k e n n z e i c h n e t  , daß die Steuernocken (15)
in Längsrichtung der Haltevorrichtungen (4) verstellbar
sind.

5. Spleißvorrichtung nach einem der Ansprüche 1 bis 3,
dadurch  g e k e n n z e i c h n e t  , daß jeder
Steuernocken (15) einen schwenkbaren Anschlag (17)
trägt, dessen Drehpunkt in der Achse der Lichtwellenleiter (3) liegt.

6. Spleißvorrichtung nach Anspruch 3, dadurch  g e -
k e n n z e i c h n e t  , daß die Kulissen (14) zueinander
verstellbar angeordnet sind.

FIG 1

FIG 2

FIG 3

$$y = b - a$$

# FIG 4

# FIG 5

Europäisches
Patentamt

**EUROPÄISCHER RECHERCHENBERICHT**

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE - A - 2 807 806 (SIEMENS)  *  Patentansprüche 1,2 und Abbildungen 1-3 -- | 1 | G 02 B 7/26 |

**RECHERCHIERTE SACHGEBIETE (Int. Cl.³)**

G 02 B 7/26

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| DEN HAAG | 4-3-1981 | MALIC |

EPA form 1503.1   06.78